# FASCICULE DE BREVET EUROPEEN

(11) **EP 1 124 307 B1**
(45) Date de publication et mention de la délivrance du brevet: **23.12.2009**
(21) Numéro de dépôt: 01400343.8
(22) Date de dépôt: 09.02.2001
(51) Int. Cl.: H02K 11/04, H02K 5/18

(54) **Convertisseur modulaire**
Modularer Umrichter
Modular converter

(30) Priorité: 11.02.2000 FR 0001748
(43) Date de publication de la demande: 16.08.2001
(73) Titulaire: MOTEURS LEROY-SOMER, 16000 Angouleme (FR)
(72) Inventeur: Petit, Serge, 16440 Roullet (FR); Petillon, Jean-Marc, 16730 Fleac (FR); Buisson, Alain, 69126 Brindas (FR); Giraud, Régis, 16000 Angouleme (FR)
(74) Mandataire: Tanty, François

(56) Documents cités:
- EP-A- 0 577 201
- EP-A- 0 898 213
- DE-A- 19 704 226
- GB-A- 2 167 608

## Description

La présente invention concerne un convertisseur pour moteur ou transformateur électrique et plus particulièrement mais non exclusivement un convertisseur pour moteur asynchrone, synchrone, à aimants permanents ou continu.

On entend par convertisseur (en anglais *inverter* ou *drive)* tout dispositif à semi-conducteurs statique, permettant le pilotage d'un moteur électrique ou le changement de fréquence pour alimenter un transformateur électrique.

On connaît des convertisseurs comprenant des cartes électroniques logées dans un boîtier fixé sur le moteur.

L'inconvénient de ces convertisseurs connus est qu'en cas de défaillance de l'électronique, il est nécessaire de procéder au remplacement du boîtier dans son ensemble, ce qui implique de désolidariser le boîtier du moteur.

Par ailleurs, chaque boîtier est spécifique à un moteur donné ce qui génère un coût de fabrication relativement important lorsque le moteur est réalisé en un faible nombre d'exemplaires.

L'invention vise à réaliser un nouveau convertisseur qui permette notamment de remplacer facilement les cartes électroniques en cas de défaillance.

L'invention a également pour but de diminuer le prix de revient du convertisseur.

Celle-ci y parvient grâce au fait que le convertisseur comporte un boîtier de raccordement comprenant des passages pour des conducteurs électriques et un module électronique à semi-conducteurs fixé de manière amovible sur le boîtier de raccordement, ce module électronique comportant un boîtier formant radiateur, ouvert à une extrémité, au moins une carte électronique au moins partiellement noyée dans une résine coulée à l'intérieur dudit boîtier formant radiateur et au moins un connecteur, l'ouverture du boîtier formant radiateur étant agencée de manière à permettre de le rapporter sur le boîtier de raccordement, ce dernier comportant au moins une fenêtre d'accès au(x) connecteur(s) du module électronique.

Grâce à l'invention, le module électronique du convertisseur peut être facilement remplacé sans qu'il soit nécessaire de désolidariser le boîtier de raccordement du moteur ou transformateur électrique sur lequel il est fixé.

De plus, les connexions électriques peuvent être facilement établies par l'utilisateur lorsque le boîtier formant radiateur et le boîtier de raccordement sont fixés l'un sur l'autre, grâce à la fenêtre d'accès prévue sur le boîtier de raccordement.

Par ailleurs, le fait que la ou les cartes électroniques du module électronique soient noyées dans une résine coulée à l'intérieur du boîtier formant radiateur garantit la fiabilité du module électronique et son isolement électrique.

Avantageusement, la résine précitée est thermiquement conductrice, de manière à améliorer la dissipation des calories du module électronique.

L'invention permet de réaliser des économies d'échelle dans la fabrication du boîtier formant radiateur et celle des cartes électroniques qu'il contient puisque c'est le boîtier de raccordement qui sert d'interface et subit les adaptations aux différents types de moteurs.

Autrement dit, il est possible de réaliser différents types de boîtiers de raccordement agencés pour recevoir un même boîtier formant radiateur.

Le boîtier de raccordement comporte, dans une réalisation particulière, des moyens de fixation sur un moteur ou transformateur.

Avantageusement, le convertisseur comporte un joint isolant thermique à l'interface entre le boîtier formant radiateur et le boîtier de raccordement.

Ce joint thermique permet d'éviter qu'aux faibles vitesses de fonctionnement du moteur, pour lesquelles le ventilateur de refroidissement du moteur tourne relativement lentement, la chaleur dégagée par le moteur ne gagne par conduction le module électronique et n'affecte son fonctionnement.

Avantageusement, le module électronique comporte un ou plusieurs composants électroniques de puissance montés sur la face arrière d'une carte et en contact thermique avec la face intérieure de la paroi arrière du boîtier formant radiateur.

De préférence, la face intérieure de la paroi arrière du boîtier formant radiateur comporte des reliefs agencés pour coopérer avec le ou les composants électroniques de puissance précités, afin de faciliter le positionnement de la ou des cartes électroniques par rapport au boîtier formant radiateur.

Avantageusement, le module électronique comporte une carte portant au moins un connecteur permettant d'assurer le raccordement électrique du convertisseur à des fils électriques véhiculant des signaux de commande, ainsi que de préférence mais non nécessairement un connecteur pour le raccordement de l'alimentation de puissance et un connecteur pour le raccordement au moteur ou transformateur.

Avantageusement encore, lorsque le module électronique comporte plusieurs cartes électroniques, la majorité des composants volumineux du module électronique sont montés sur les faces des cartes électroniques qui sont tournées vers le centre du boîtier formant radiateur, ce qui permet de gagner en compacité.

Le boîtier formant radiateur comporte avantageusement, sur au moins une face, des ailettes se présentant sous la forme de nervures parallèles discontinues, créant des alignements d'ailettes dans deux directions perpendiculaires entre elles, l'air pouvant s'écouler entre les ailettes dans chacune de ces deux directions.

Cette disposition des ailettes permet de garantir un refroidissement par convection dans deux orientations différentes du convertisseur par rapport à la verticale.

De préférence, chaque ailette présente en section transversale une forme oblongue, avec deux faces planes principales opposées convergeant vers son sommet.

Cette géométrie permet de réaliser aisément des ailettes plus ou moins longues selon la puissance à dissiper.

Les ailettes sont avantageusement réalisées en utilisant un moule comportant un ou plusieurs tiroirs interchangeables, choisis selon la longueur à donner aux ailettes.

On évite ainsi d'avoir à utiliser un moule spécifique pour réaliser différentes longueurs d'ailettes, puisque ces dernières peuvent être réalisées à la longueur voulue en choisissant le ou les tiroirs adaptés.

De plus, les ailettes restent relativement courtes et refroidissent assez rapidement, ce qui autorise des cadences élevées en moulage par injection.

L'invention a encore pour objet une machine électrique, par exemple un moteur électrique, caractérisée par le fait qu'elle comporte un convertisseur tel que défini plus haut.

D'autres caractéristiques et avantages de la présente invention ressortiront à la lecture de la description détaillée qui va suivre, d'exemples de réalisation non limitatifs, et à l'examen du dessin annexé, sur lequel :
- la figure 1 est une vue schématique et partielle, en coupe axiale, d'un convertisseur conforme à l'invention,
- la figure 2 représente isolément, en vue de côté, les cartes du module électronique,
- la figure 3 est une vue de dessus selon la flèche III de la figure 2,
- la figure 4 est une vue partielle et schématique des ailettes de refroidissement réalisées sur la face arrière du boîtier formant radiateur, et
- la figure 5 représente un convertisseur muni de pattes de fixation murale.

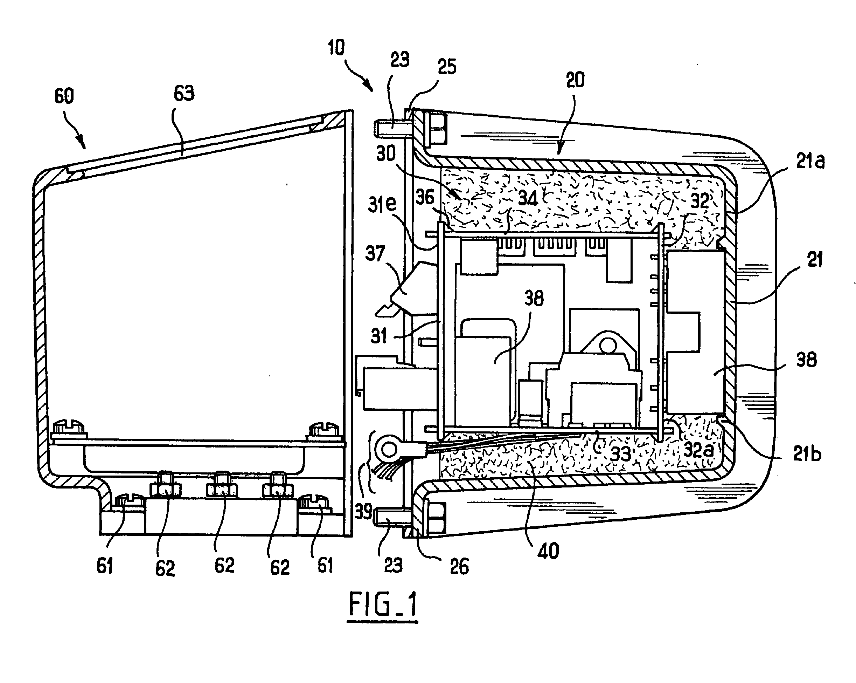

On a représenté sur la figure 1 un convertisseur conforme à l'invention, comprenant un module électronique 10, de puissance comprise entre 0,25 et 15 kW par exemple, comportant un boîtier formant radiateur 20, ouvert à l'avant, réalisé par moulage par injection en aluminium, avec à l'intérieur un ensemble de cartes électroniques 30 constitué ici par quatre cartes électroniques, à savoir une carte avant 31, une carte arrière 32 et deux cartes intermédiaires 33 et 34.

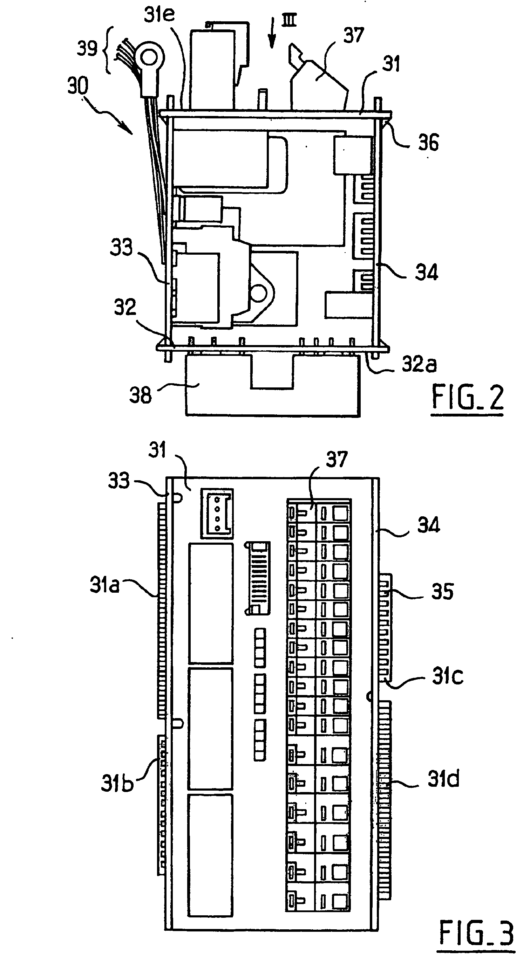

On a représenté isolément sur la figure 2 l'ensemble de cartes électroniques 30.

Les cartes avant 31 et arrière 32 sont parallèles et sont perpendiculaires aux cartes intermédiaires 33 et 34.

Les cartes intermédiaires 33 et 34 sont pourvues, au voisinage de leurs extrémités adjacentes aux cartes avant 31 et arrière 32, de fentes et les cartes avant 31 et arrière 32 sont pourvues de languettes de connexion conformées pour s'engager dans les fentes précitées.

Les languettes de connexion de la carte avant 31 portent les références 3 la à 31d sur la figure 3.

Des pistes électriques 35 sont réalisées sur les languettes de connexion, ces pistes formant partie intégrante du circuit imprimé de la carte.

Ces pistes électriques sont reliées électriquement aux circuits imprimés des cartes comportant les fentes.

Des ponts de soudure 36 assurent la continuité électrique entre les différentes cartes 31 à 34 au niveau des languettes et des fentes associées ainsi que l'immobilisation des cartes entre elles.

On peut ainsi réaliser le circuit électrique du convertisseur sans avoir à utiliser de nappes souples de fils conducteurs pour relier les différentes cartes, contrairement à ce qui est le cas dans les convertisseurs connus.

Dans l'exemple de réalisation décrit, ce sont les cartes avant 31 et arrière 32 qui comportent des languettes à engager dans des fentes correspondantes prévues sur les cartes intermédiaires 33 et 34.

On peut bien entendu, sans sortir du cadre de l'invention, munir les cartes intermédiaires 33 et 34 de languettes et les cartes avant 31 et arrière 32 de fentes pour recevoir ces languettes.

On peut encore munir l'une des cartes intermédiaires 33 et 34 de languettes et l'autre de fentes.

Dans l'exemple de réalisation décrit, la carte avant 31 comporte sur sa face extérieure 31e une barrette de connecteurs 37, laquelle permet de relier le convertisseur à des lignes électriques véhiculant par exemple des signaux de commande pour faire tourner le moteur plus ou moins rapidement.

Des composants électroniques de puissance 38 sont montés sur la face arrière 32a de la carte arrière 32.

Ces composants électroniques de puissance 38 sont plaqués contre la face intérieure 21a de la paroi arrière 21 du boîtier formant radiateur 20, de manière à transmettre par conduction l'énergie thermique à celui-ci.

On remarquera à l'examen des figures 1 et 2 qu'une grande partie des composants volumineux 58 du convertisseur sont montés sur les faces des cartes intermédiaires 33 et 34 tournées vers le centre du boîtier formant radiateur 20, ce qui permet de réaliser le convertisseur de manière particulièrement compacte.

Dans l'exemple de réalisation décrit, le convertisseur comporte des câbles électriques 39 reliés à l'une des cartes et s'étendant hors du boîtier formant radiateur 20.

Une résine électriquement isolante 40 mais thermiquement conductrice est coulée à l'intérieur du boîtier formant radiateur 20 pour protéger l'ensemble des cartes électroniques 30 de l'humidité, des vibrations et parfaire l'isolation électrique.

La résine 40 vient à affleurement de la carte avant 31, comme on peut le voir sur la figure 1.

La face intérieure 2 la de la paroi arrière 21 du boîtier formant radiateur 20 comporte, comme représenté, des reliefs 21b assurant un positionnement prédéterminé de l'ensemble des cartes électroniques 30 dans le boîtier formant radiateur 20 avant que la résine 40 ne soit coulée.

Ces reliefs 21b sont agencés pour coopérer avec les composants électroniques de puissance 38.

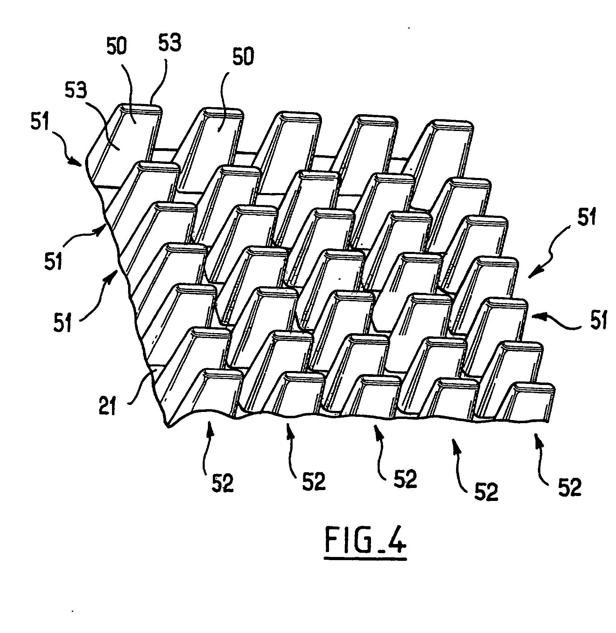

Le boîtier formant radiateur 20 comporte avantageusement, sur la face extérieure de sa paroi arrière 21, une pluralité d'ailettes 50 que l'on a représentées schématiquement sur la figure 4.

Ces ailettes 50 n'ont pas été représentées sur la figure 1 dans un souci de clarté du dessin.

Les ailettes 50 sont disposées selon des rangées parallèles 51.

Au sein de chaque rangée 51, les ailettes 50 sont disposées à intervalle régulier, de sorte qu'elles constituent des alignements 52 perpendiculaires aux rangées 51.

Chaque ailette 50 présente une forme allongée dans une direction perpendiculaire au plan de la paroi arrière 21, avec en section transversale une forme oblongue de grand axe parallèle aux rangées 51.

On remarquera à l'examen de la figure 4 que l'air peut circuler entre deux rangées 51 consécutives ainsi qu'entre les alignements 52, ce qui permet le montage du convertisseur soit avec les rangées 51 horizontales, le boîtier formant radiateur 20 étant alors orienté comme représenté sur la figure 1, c'est-à-dire avec les cartes intermédiaires 33 et 34 horizontales, soit en variante avec les rangées 51 verticales, les cartes intermédiaires 33 et 34 étant alors verticales.

Dans les deux cas, les mouvements de convection verticaux de l'air entre les ailettes 50 ne sont pas entravés.

Chaque ailette 50 comporte deux faces planes principales opposées 53 qui convergent avec un angle de quelques degrés vers l'extrémité libre de l'ailette.

Selon la puissance thermique à dissiper, les ailettes 50 sont réalisées plus ou moins longues.

Les ailettes 50 sont réalisées dans l'exemple décrit d'un seul tenant en aluminium avec le reste du boîtier, au moyen d'un moule comportant un tiroir arrière qui est interchangeable, ce qui permet par le choix du tiroir de réaliser des ailettes plus ou moins longues.

On peut ainsi, au moyen d'un même moule, réaliser un boîtier ayant des ailettes dont la longueur est adaptée à la puissance à dissiper.

La forme générale aplatie de chaque ailette 50 facilite le nettoyage du radiateur par rapport aux radiateurs connus comportant une pluralité de troncs de cônes, car les faces principales planes des ailettes offrent une surface de contact relativement importante avec un organe de nettoyage déplacé parallèlement aux rangées 51.

Dans l'exemple de la figure 1, le module électronique 10 est assemblé avec un boîtier de raccordement électrique 60 fixé sur la partie supérieure du carter d'un moteur électrique non représenté.

Le boîtier formant radiateur 20 est positionné de manière à se trouver dans le flux d'air de refroidissement généré par le ventilateur du moteur.

Le boîtier de raccordement 60 comporte des boulons 61 servant à la fixation sur le moteur ainsi que des bornes de connexion 62 reliées au moteur.

Les fils 39 du convertisseur 10 sont à relier à ces bornes de connexion 62.

Le boîtier 60 comporte en partie supérieure une fenêtre 63 permettant à un utilisateur d'accéder aisément aux conducteurs électriques 39, aux bornes de connexion 62 ainsi qu'à la barrette de connecteurs 37.

Des passages garnis de joints d'étanchéité sont prévus sur le boîtier 60, de façon connue en soi, pour le passage des fils d'alimentation et de commande du convertisseur 10.

On n'a pas représenté ces passages dans un souci de clarté du dessin.

Le boîtier formant radiateur 20 comporte à l'avant, dans l'exemple de réalisation décrit, une bride 26 pourvue d'une pluralité de vis de fixation 23 servant au montage sur le boîtier de raccordement 60.

Un joint isolant thermique 25 est placé sur le pourtour de la bride 26 pour constituer une barrière thermique tendant à s'opposer à la transmission de chaleur du boîtier de raccordement 60 vers le boîtier formant radiateur 20.

Cette barrière thermique est particulièrement utile lors des bas régimes de fonctionnement du moteur, c'est-à-dire lorsque le ventilateur entraîné par l'arbre du moteur tourne avec une faible vitesse.

La présence du joint 25 freine alors la transmission par conduction de la chaleur en provenance du carter du moteur vers le boîtier formant radiateur 20.

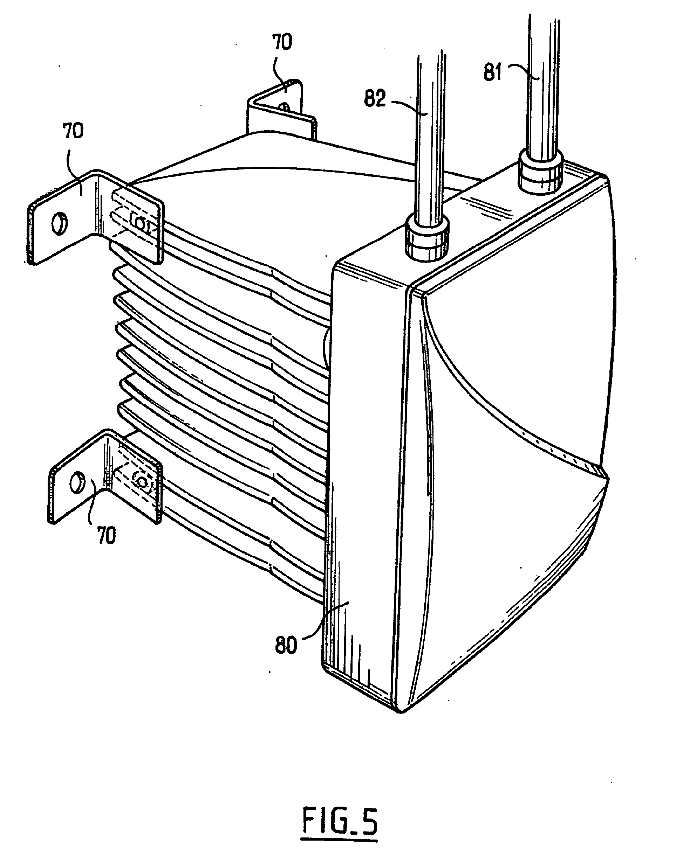

L'ensemble des cartes électroniques 30 permet la réalisation d'un module qui peut être assemblé avec un boîtier de raccordement 60 fixé sur un moteur, comme cela vient d'être décrit, ou en variante être logé dans un boîtier indépendant, comme cela va maintenant être décrit en référence à la figure 5.

Sur cette figure, des pattes de fixation murale 70 sont prévues sur les parois latérales du boîtier logeant l'ensemble des cartes électroniques 30.

Dans une variante non représentée, ces pattes de fixation sont prévues sur la paroi arrière dudit boîtier.

Un boîtier de raccordement électrique 80 est fixé sur l'avant du boîtier logeant l'ensemble des cartes électroniques 30.

On a représenté des câbles d'arrivée 81 et de départ 82 connectés à l'ensemble des cartes électroniques 30 à l'intérieur du boîtier de raccordement 80.

Si la puissance électrique à dissiper l'exige, le boîtier du convertisseur peut comporter des ailettes telles que celles décrites en référence à la figure 4.

Bien entendu, l'invention n'est pas limitée aux exemples de réalisation qui viennent d'être décrits.

On peut notamment réaliser l'ensemble des cartes électroniques 30 avec une carte avant, une carte arrière et une seule carte intermédiaire, si le nombre de composants électroniques ne nécessite pas l'utilisation d'une deuxième carte intermédiaire.

On peut encore modifier l'orientation des cartes par rapport aux parois du boîtier.

On peut encore intercaler, entre le boîtier de raccordement électrique et le boîtier formant radiateur, un module intermédiaire servant par exemple à dissiper de l'énergie thermique.

Un ou plusieurs composants électroniques de puissance peuvent encore être montés sur l'une des cartes intermédiaires et être reliés thermiquement au boîtier formant radiateur logeant l'ensemble électronique.

Le moteur peut être remplacé par un transformateur, par exemple un transformateur logé dans le carter d'un moteur et dont le primaire et le secondaire sont bobinés sur des circuits magnétiques analogues à ceux d'un stator et d'un rotor.

## Revendications

1. Convertisseur pour moteur ou transformateur électrique, **caractérisé par le fait qu'**il comporte un boîtier de raccordement (60 ; 80) comprenant des passages pour des conducteurs électriques et un module électronique (10) à semi-conducteurs fixé de manière amovible sur le boîtier de raccordement, ce module électronique comportant un boîtier formant radiateur (20), ouvert à une extrémité, au moins une carte électronique (31 ; 32 ; 33 ; 34) au moins partiellement noyée dans une résine (40) coulée à l'intérieur dudit boîtier formant radiateur (20) et au moins un connecteur (37) émergeant de la résine, l'ouverture du boîtier formant radiateur étant agencée de manière à permettre de le rapporter sur le boîtier de raccordement, ce dernier comportant au moins une fenêtre d'accès (63) au(x) connecteur(s) du module électronique.

2. Convertisseur selon la revendication 1, **caractérisé par le fait que** le boîtier de raccordement comporte des moyens de fixation (61) sur un moteur ou transformateur.

3. Convertisseur selon l'une des revendications 1 et 2, **caractérisé par le fait qu'**il comporte un joint isolant thermique (25) à l'interface entre le boîtier formant radiateur (20) et le boîtier de raccordement (60).

4. Convertisseur selon l'une quelconque des revendications précédentes, **caractérisé par le fait que** le boîtier formant radiateur (20) est placé dans le flux d'air généré par le ventilateur de refroidissement d'un moteur électrique sur lequel est fixé le boîtier de raccordement.

5. Convertisseur selon l'une quelconque des revendications précédentes, **caractérisé par le fait que** la résine est thermiquement conductrice.

6. Convertisseur selon l'une quelconque des revendications précédentes, **caractérisé par le fait que** le module électronique (10) comporte un ou plusieurs composants électroniques de puissance (38) montés sur la face arrière d'une carte (32) et en contact thermique avec la face intérieure (21a) de la paroi arrière (21) du boîtier formant radiateur (20).

7. Convertisseur selon la revendication précédente, **caractérisé par le fait que** la face intérieure (21a) de la paroi arrière (21) du boîtier formant radiateur comporte des reliefs (21b) agencés pour coopérer avec le ou les composants électroniques de puissance (38).

8. Convertisseur selon l'une quelconque des revendications précédentes, **caractérisé par le fait que** le module électronique comporte une carte (31) portant au moins un connecteur (37) permettant d'assurer le raccordement électrique du convertisseur avec des fils électriques véhiculant des signaux de commande ainsi que de préférence un connecteur pour le raccordement de l'alimentation de puissance et un connecteur pour le raccordement au moteur ou transformateur.

9. Convertisseur selon l'une quelconque des revendications précédentes, **caractérisé par le fait que** le boîtier formant radiateur comporte, sur au moins une face, des ailettes (50) se présentant sous la forme de nervures parallèles discontinues, créant des alignements d'ailettes dans deux directions perpendiculaires entre elles, l'air pouvant s'écouler entre les ailettes dans chacune des deux directions.

10. Convertisseur selon la revendication précédente, **caractérisé par le fait que** chaque ailette (50) présente en section transversale une forme oblongue, avec deux faces planes principales opposées convergeant vers son sommet.

11. Procédé pour fabriquer un convertisseur tel que défini dans la revendication précédente, **caractérisé par le fait que** les ailettes sont réalisées en utilisant un moule comportant un ou plusieurs tiroirs interchangeables choisis selon la longueur à donner aux ailettes.

12. Machine électrique, telle qu'un moteur électrique, **caractérisée par le fait qu'**elle comporte un convertisseur tel que défini dans l'une quelconque des revendications 1 à 10.

## Claims

1. A converter for one of an electric motor and a transformer, **characterized in that** it comprises a connection box (60; 80) having passages for electrical conductors and a semiconductor electronic module (10) releasably fixed to the connection box, said electronic module comprising a radiator-forming box (20) having an opening at one end, at least one electronic card (31; 32; 33; 34) that is at least partially embedded in a resin (40) cast into the inside of said radiator-forming box (20), and at least one connector (37) emerging from the resin, the opening of the radiator-forming box being arranged in such a manner as to enable said radiator forming box to be fitted to the connection box, the connection box having at least one window (63) giving access to the connector(s) of the electronic module.

2. A converter according to claim 1, **characterized in that** the connection box has mounting means (61) for mounting on one of a motor and a transformer.

3. A converter according to any preceding claims , **characterized in that** it comprises a thermally insulating gasket (25) at an interface between the radiator-forming box (20) and the connection box (68).

4. A converter according to any preceding claims , **characterized in that** the radiator-forming box (20) is placed in a flow of air generated by a cooling fan of an electric motor on which the connection box is fixed.

5. A converter according to any preceding claims , **characterized in that** the resin is thermally conductive.

6. A converter according to any preceding claims , **characterized in that** the electronic module (10) has one or more electronic power components (38) mounted on a rear face of a card (32) and in thermal contact with an inside face (21a) of a rear wall (21) of the radiator-forming box (20).

7. A converter according to claim 6, **characterized in that** the inside face (21a) of the rear wall (21) of the radiator-forming box has portions (21b) arranged to cooperate with the electronic power component(s) (38).

8. A converter according to any preceding claims , **characterized in that** the electronic module has a card (31) carrying at least one connector (37) for electrically connecting the converter to electric wires conveying control signals and preferably a connector for connection to a power supply and a connector for connection to the motor or transformer.

9. A converter according to any preceding claims , **characterized in that** the radiator-forming box has fins (50) on at least one face, the fins being in the form of discontinuous parallel ribs establishing ranks of fins in two mutually perpendicular directions, air being able to flow between the fins in each of the two directions.

10. A converter according to claim 9, **characterized in that** each fin (50) has a cross-section that is oblong in shape, with two opposite main plane faces that converge towards a tip of the fin.

11. A method of manufacturing a converter as defined in claim 10, **characterized in that** the fins are made using a mold having one or more interchangeable slides that are selected depending on the length to be given to the fins.

12. An electric machine such as an electric motor, **characterized in that** it includes a converter as defined in any one of claims 1 to 10.

## Patentansprüche

1. Umrichter für einen Motor oder einen elektrischen Transformator, **dadurch gekennzeichnet, dass** er ein Verbindungsgehäuse (60; 80) aufweist, das Durchgänge für elektrische Leiter und ein elektrisches Halbleitermodul (10) enthält, das abnehmbar auf dem Verbindungsgehäuse befestigt ist, wobei das elektrische Modul ein einen Kühlkörper (20) bildendes Gehäuse, das auf einer Seite offen ist, mindestens eine elektronische Karte (31; 32; 33; 34), die mindestens zu einem Teil in einem Harz (40) eingebettet ist, das ins Innere des den Kühlkörper (20) bildenden Gehäuses eingeflossen ist, und mindestens einen Anschluss (37), der aus dem Harz herausragt, enthält, wobei die Öffnung des den Kühlkörper bildenden Gehäuses so angeordnet ist, dass sie ihm den Anschluss auf das Verbindungsgehäuse erlaubt, das mindestens ein Zugangsfenster (63) für den Anschluss / die Anschlüsse des elektronischen Moduls enthält.

2. Umrichter nach Anspruch 1, **dadurch gekennzeichnet, dass** das Verbindungsgehäuse an einem Motor oder an einem Transformator eine Befestigungsvorrichtung (61) enthält.

3. Umrichter nach einem der Ansprüche 1 oder 2, **dadurch gekennzeichnet, dass** der Umrichter an der Schnittstelle zwischen dem den Kühlkörper (20) bildenden Gehäuse und dem Verbindungsgehäuse (60) eine wärmeisolierende Dichtung (25) enthält.

4. Umrichter nach einem der vorhergehenden Ansprüche, **dadurch gekennzeichnet, dass** das den Kühlkörper (20) bildende Gehäuse im Luftstrom angeordnet ist, der vom Kühlventilator eines elektrischen Motors erzeugt ist, auf dem das Verbindungsgehäuse befestigt ist.

5. Umrichter nach einem der vorergehenden Ansprüche, **dadurch gekennzeichnet, dass** das Harz wärmeleitend ist.

6. Umrichter nach einem der vorhergehenden Ansprüche, **dadurch gekennzeichnet, dass** das elektronische Modul (10) eine oder mehrere Leistungs-Elektronikkomponenten (38) enthält, die auf der Rückseite einer Karte (32) und in Wärmekontakt mit der Innenseite (21a) der Hinterwand (21) des den Kühlkörper (20) bildenden Gehäuses angebracht ist.

7. Umrichter nach einem der vorhergehenden Ansprüche, **dadurch gekennzeichnet, dass** die Innenseite (21a) der Hinterwand (21) des den Kühlkörper bildenden Gehäuses Erhebungen (21b) enthält, die so angeordnet sind, dass sie mit dem oder den Leistungs-Elektronikkomponenten (38) zusammenarbeiten.

8. Umrichter nach einem der vorhergehenden Ansprüche, **dadurch gekennzeichnet, dass** das elektronische Modul eine Karte (31) enthält, die mindestens einen Anschluss (37), der es erlaubt, die elektrische Verbindung des Umrichters mittels befehlssignalübertragender elektrischer Drähte sicherzustellen, sowie vorzugsweise einen Anschluss zum Verbinden der Leistungsspeisung und einen Anschluss zum Verbinden mit dem Motor oder dem Transformator aufweist.

9. Umrichter nach einem der vorhergehenden Ansprüche, **dadurch gekennzeichnet, dass** das den Kühlkörper bildende Gehäuse auf mindestens einer Seite Rippen (50) in Form von parallelen unterbrochenen Ausbuchtungen aufweist, die Rippenanordnungen in zwei einander senkrechten Richtungen schaffen, wobei die Luft in jede der beiden Richtungen zwischen den Rippen strömen kann.

10. Umrichter nach einem der vorhergehenden Ansprüche, **dadurch gekennzeichnet, dass** jede der Rippen (50) einen länglichen Querschnitt aufweist, mit zwei flachen gegenüberliegenden Hauptseiten, die zur Spitze hin zusammenlaufen.

11. Verfahren zum Herstellen eines wie im vorhergehenden Patentanspruch definierten Umrichters, **dadurch gekennzeichnet, dass** die Rippen unter Verwendung einer Form erstellt sind, die eine oder mehrere austauschbare Schubelemente enthält, die nach der Länge, ausgewählt sind, welche die Rippen erhalten sollen.

12. Elektrische Maschine, wie etwa ein elektrischer Motor, **dadurch gekennzeichnet, dass** sie einen Umrichter nach einem der Ansprüche 1 bis 10 enthält.
